# EUROPÄISCHE PATENTSCHRIFT

(11) **EP 4 154 772 B1**
(45) Veröffentlichungstag und Bekanntmachung des Hinweises auf die Patenterteilung: **10.04.2024**
(21) Anmeldenummer: 22207972.5
(22) Anmeldetag: 26.10.2021
(51) Int. Cl.: A47G 19/22, A47G 23/16

(54) **GETRÄNKEBEHÄLTER**
BEVERAGE CONTAINER
RÉCIPIENT POUR BOISSONS

(30) Priorität: 24.06.2021 EP 21181369
(43) Veröffentlichungstag der Anmeldung: 29.03.2023
(62) Teilanmeldung aus: 21204634.6
(73) Patentinhaber: Starflow GmbH, 6370 Stans (CH)
(72) Erfinder: Ganzha, Dmitry, 1180 Wien (AT)
(74) Vertreter: Weickmann & Weickmann PartmbB

(56) Entgegenhaltungen:
- WO-A1-2016/145027
- CN-A- 110 680 150
- US-A1- 2020 029 714

## Beschreibung

Die Erfindung betrifft einen Getränkebehälter.

Getränkebehälter, insbesondere wiederverwendbare Getränkebehälter erfreuen sich zunehmender Beliebtheit.

Heutzutage sind derartige Getränkebehälter in vielen Ausgestaltungen, in vielen Farben sowie auch personalisiert erhältlich und einsetzbar. Zudem ist es durch sie ermöglicht, sowohl Heißgetränke, wie zum Beispiel Kaffee oder Tee, als auch Kaltgetränke, wie zum Beispiel Wasser oder Softdrinks auslaufsicher mitzunehmen und nahezu überall zu konsumieren.

Üblicherweise weist ein derartiger Getränkebehälter einen Becher mit einer Wandung auf, die einen Innenraum begrenzt. Der Innenraum dient einer Aufnahme des Getränkes. Ferner weisen bekannte Getränkebehälter einen Deckel auf, der abnehmbar auf einer Öffnung des Bechers angeordnet ist.

Durch das Zeitalter sogenannter Fitness-Health-Apps und des sogenannten Sports-Trackings besteht zunehmend ein Bedarf an gesammelten Fitness- bzw. "Health"-Daten, um einem Nutzer derartiger Apps eine detaillierte Auswertung über seinen Lebensstil, insbesondere auch über seinen Ernährungsstil zu ermöglichen. Fitness-Daten können neben Vitalwerten wie Puls, Blutdruck oder Sauerstoffsättigung auch eine über ein bestimmtes Zeitintervall zu sich genommene Flüssigkeitsmenge sein.

Insbesondere hinsichtlich des letztgenannten Aspekts ist oftmals eine manuelle Eingabe der getrunkenen Flüssigkeitsmenge durch den Nutzer notwendig, bevor die Anwendungen ermitteln, ob genug oder zu wenig Flüssigkeit zu sich genommen wurde.

Als Stand der Technik können zum Beispiel CN 110 680 150 A1, US 2020/029714 A1, WO 2016/145027 A1 und WO 2020/223540 A1 genannt werden. Das Dokument CN 110 680 150 A1 offenbart den Oberbegriff des Anspruchs 1.

Ausgehend hiervon liegt der Erfindung die Aufgabe zugrunde, einen Getränkebehälter anzugeben, mit dessen Hilfe einem Nutzer eine einfache und insbesondere automatisierte Erfassung einer zu sich genommenen Flüssigkeitsmenge ermöglicht ist.

Die Aufgabe wird erfindungsgemäß gelöst durch einen Getränkebehälter mit den Merkmalen des Anspruchs 1. Vorteilhafte Ausgestaltungen, Weiterbildungen und Varianten sind Gegenstand der Unteransprüche.

Konkret wird die Aufgabe gelöst durch einen Getränkebehälter, der einen Becher sowie einen Deckel aufweist. Der Becher weist hierbei eine Wandung auf, die einen an einer Oberseite des Bechers offenen Aufnahmeraum für Flüssigkeit begrenzt.

Der Deckel ist derart auf der Oberseite des Bechers abnehmbar angeordnet, dass er eine Aufnahmeraumöffnung des Aufnahmeraumes fluiddicht verschließt, sodass bei einem Transport oder beim Umfallen des gefüllten Getränkebehälters keine Flüssigkeit austreten kann.

Unter dem Begriff "Flüssigkeit" können im Sinne dieser Anmeldung allgemein Getränke und beispielsweise jedoch nicht einschränkend die eingangs genannten Heiß- oder Kaltgetränke verstanden werden.

In dem Deckel ist erfindungsgemäß eine Sensoreinheit angeordnet. Die Sensoreinheit dient einer Erfassung der aus dem Becher von einem Nutzer entnommenen Flüssigkeitsmenge. Mit anderen Worten erfasst die Sensoreinheit die Menge der durch den Nutzer getrunkenen Flüssigkeit.

Ferner weist der Deckel ein Leuchtelement auf, das derart eingerichtet ist, in Abhängigkeit der vom Nutzer entnommenen Flüssigkeitsmenge verschiedenfarbig zu leuchten. Dies dient insbesondere dazu, dem Nutzer auf eine einfache Art anzuzeigen, ob eine vorgegebene Menge an Flüssigkeit bereits getrunken wurde. Somit kann das Leuchtelement beispielsweise rot leuchten, wenn eine vorgegebene Flüssigkeitsmenge noch nicht entnommen, also getrunken wurde und beispielsweise grün leuchten, wenn die vorgegebene Flüssigkeitsmenge erreicht wurde. Ferner sind jedoch auch andere Farb- und/oder Leucht-Kombinationen denkbar.

Weiterhin weist der Getränkebehälter erfindungsgemäß eine drahtlose Kommunikationseinheit auf, die derart eingerichtet ist, mit einem mobilen Endgerät des Nutzers eine Datenverbindung auszubilden und die erfasste Flüssigkeitsmenge zur Auswertung an das mobile Endgerät des Nutzers zu übermitteln.

Hierbei kann unter dem mobilen Endgerät allgemein ein elektronisches Kommunikationsgerät oder ein (tragbarer) Computer verstanden werden. Speziell handelt es sich bei dem mobilen Endgerät beispielsweise um ein Handy (Smartphone), ein Tablet, eine Smart Watch oder um einen Personal Digital Assistent (PDA). Bei der Datenverbindung kann es sich beispielsweise um bekannte Nahbereichs-Datenverbindungen, wie beispielsweise Bluetooth handeln. Hierdurch wird eine größtmögliche Kompatibilität des Getränkebehälters und mobilen Endgeräten der Nutzer ermöglicht. Alternativ kann es sich bei dem mobilen Endgerät jedoch auch um ein Analysegerät eines Arztes handeln, der in diesem Zusammenhang die erfassten Werte für eine Diagnose heranziehen kann. Ferner ist es denkbar, mehrere mobile Endgeräte zur Erfassung der Vitalwerte hinzu zu ziehen. So kann beispielsweise über einen Kopfhörer, der drahtlos oder drahtgebunden mit dem Handy des Nutzers verbunden ist, eine Körpertemperatur des Nutzer erfassen und diese Information an die bereits erwähnte Health-App zur weiteren Verarbeitung übermitteln.

Ferner kann alternativ oder ergänzend durch das Leuchtelement auch die aufgebaute Datenverbindung, also, wenn sich der Getränkebehälter erfolgreich mit dem mobilen Endgerät verbunden hat, visualisiert werden. Hierzu kann das Leuchtelement in einer weiteren Farbe, beispielsweise blau leuchten.

Die Auswertung kann hierbei beispielsweise durch eine Fitness- oder Health-App erfolgen, die den erfassten Wert in Relation zu einer empfohlenen Flüssigkeitsmenge setzt und den Nutzer entsprechend informiert, ob dieser und/oder wenn dieser genug getrunken hat. Der Nutzer weiß somit immer, wie viel Flüssigkeit er bereits pro Zeiteinheit, beispielsweise pro Tag, zu sich genommen hat und wie viel er gegebenenfalls noch zu sich nehmen sollte. Ferner kann die Auswertung auch derart ausgebildet sein, dass der Nutzer per Benachrichtigung daran erinnert wird, zu trinken. Diese Erfassung und Auswertung erfolgt vollständig automatisiert während des Trinkens des Nutzers aus dem Getränkebehälter, da die getrunkene Flüssigkeitsmenge vorher durch die Sensoreinheit fließt. Der Nutzer muss somit die getrunkene Menge nicht manuell festhalten bzw. eintragen.

In einer Ausführungsform ist die Sensoreinheit ferner dazu eingerichtet, organische Schadstoffe, insbesondere Bakterien und/oder Viren und/oder zumindest einen aus dem Speichel des Nutzers ableitbaren Vitalwert zu erfassen. In diesem Zusammenhang ist die drahtlose Kommunikationseinheit ebenfalls derart eingerichtet auch diese erfassten Daten an das mobile Endgerät des Nutzers für eine Auswertung zu übermitteln.

Der Erfassung derartiger organischer Schadstoffe liegt der Gedanke zugrunde, den Nutzer zu warnen, wenn dieser im Speichel einen erhöhten Schadstoffgehalt (z.B. eine erhöhte Anzahl an Bakterien und/oder Viren) aufweist. Dies kann beispielsweise ein Anzeichen für eine bevorstehende Erkrankung und/oder eine Infektion sein. Ferner ist hierdurch beispielsweise ein Blutzuckergehalt des Nutzers feststellbar. Die Auswertung und Warnung des Nutzers kann hierbei beispielsweise mittels und durch die bereits erwähnte Fitness-Health-App erfolgen, die auf dem mobilen Endgerät des Nutzers hinterlegt ist.

Bei dem zumindest einen Vitalwert kann es sich beispielsweise jedoch nicht einschränkend um den (Blut-)Zuckerwert handeln, deren Erfassung und Auswertung insbesondere für Diabetiker sehr relevant ist. Vielmehr können jedoch auch andere ähnlich ableitbare Vitalwerte erfasst werden.

Der Vorteil dieser Ausgestaltung liegt damit in der erweiterten Erfassung von Parametern, die dem Nutzer auf einfache Weise eine Auskunft über seinen Gesundheitszustand und/oder seine Ernährungsweise ermöglichen.

In einer weiteren Ausführungsform weist der Becher und/oder der Deckel einen elektrischen Energiespeicher auf. Der elektrische Energiespeicher, der vorzugsweise als Akku ausgebildet ist, dient einer Versorgung der Sensoreinheit und/oder der drahtlosen Kommunikationseinheit mit elektrischer Energie.

Alternativ oder ergänzend kann das Leuchtelement hierbei auch zur Anzeige eines Ladezustands herangezogen werden, sodass es beispielsweise grün leuchtet, wenn der Ladezustand des elektrischen Energiespeichers noch ausreichend ist. Leuchtet das Leuchtelement beispielsweise rot, so ist dies ein Anzeichen für einen schwachen Ladezustand und der Getränkebehälter sollte aufgeladen werden.

Alternativ oder ergänzend hierzu kann der Ladezustand des elektrischen Energiespeichers auch durch die drahtlose Kommunikationseinheit an das mobile Endgerät des Nutzers übermittelt werden, sodass dieser den Ladezustand des elektrischen Energiespeichers auf dem mobilen Endgerät prüfen kann.

Gemäß einer weiteren Ausführungsform weist der Becher und/oder der Deckel ein Ladeelement zum kabelgebundenen und/oder drahtlosen Laden des elektrischen Energiespeichers auf. Unter dem Begriff "drahtloses Laden" kann hierbei beispielsweise ein induktives Laden verstanden werden. Das Ladeelement kann hierbei beispielsweise im Boden des Bechers angeordnet sein, sodass der Getränkebehälter zum Laden, ähnlich wie beim induktiven Laden heutiger Smartphones, auf eine induktive Ladestation gestellt wird. Im Falle, dass das Ladeelement im Deckel angeordnet ist, kann dieser beispielsweise zum Laden des Energiespeicherst von dem Becher entfernt (z.B. abgeschraubt) werden und in analoger Weise zu vorstehend beschriebenem Beispiel auf eine induktive Ladestation gelegt werden.

Alternativ oder ergänzend hierzu ist das Ladeelement zu einem kabelgebundenen Laden des elektrischen Energiespeichers ausgebildet.

Hierdurch ist ein einfaches Aufladen des elektrischen Energiespeichers ermöglicht.

In einer Weiterbildung weist der Deckel ein rohrförmiges Mundstück auf, in dem die Sensoreinheit angeordnet ist. Durch das Mundstück wird das Trinken aus dem Getränkebehälter sowie die Erfassung der getrunkenen Flüssigkeitsmenge erleichtert.

In einer Ausführungsform ist das Leuchtelement als ein Leuchtring, insbesondere als ein LED-Leuchtring ausgebildet, der an einer Oberseite des Deckels angeordnet ist. Hierbei ist der Leuchtring an einer Außenseite des Deckels, also mit anderen Worten "von außen" vollständig sichtbar an der Oberseite des Deckels angeordnet. Hierdurch wird sichergestellt, dass das leuchtende Leuchtelement und insbesondere die Farbe, in der das Leuchtelement leuchtet einfach und schnell sichtbar ist.

Des Weiteren weist der Deckel eine Deckelklappe und einen Klappmechanismus auf. Bei dem Klappmechanismus handelt es sich in einer einfachsten Ausgestaltung um ein Scharnier. Die Deckelklappe ist an dem Klappmechanismus von einer geschlossenen Stellung in eine offene Stellung und umgekehrt schwenkbar gelagert. Durch das "Hochklappen" der Deckelklappe wird somit beispielsweise das Mundstück zugänglich, sodass der Nutzer hierdurch trinken kann. Weiters ist das Mundstück durch die heruntergeklappte Deckelklappe, z.B. beim Transport des Getränkebehälters vor Verschmutzungen geschützt.

In einer Ausführungsform weist der Deckel zum Verriegeln des Klappmechanismus eine Verriegelungseinheit aufweist, die ein Rastelement zum Verriegeln des Klappmechanismus und ein Entriegelungselement zum Entriegeln des Rastelements aufweist. Hierbei ist das Rastelement an der Deckelklappe angeordnet, das mit einem korrespondierenden Element am Deckel eine Rastverbindung zum Verriegeln des Deckels eingeht. Mittels des Entriegelungselements kann diese Rastverbindung zum Öffnen der Deckelklappe gelöst werden.

In einer Weiterbildung ist das Entriegelungselement mittels zumindest einem Magnetpaar in einer Verriegelungsstellung gehalten. Hierbei kann unter dem Begriff "Verriegelungsstellung" eine Stellung bzw. Position des Entriegelungselements verstanden werden, in der ein Verriegeln der Deckelklappe durch die bereits erwähnten Rastelemente ermöglicht ist. Hierzu ist der erste Magnet des zumindest einen Magnetpaares in dem Entriegelungselement und der zweite Magnet des zumindest einen Magnetpaares an bzw. in dem Deckel angeordnet. Durch die Magnetkraftbeaufschlagung ist eine zuverlässige Positionierung des Entriegelungselements erreicht, sodass ein zuverlässiges Verrasten und damit Verriegeln des Deckels ermöglicht wird. Ferner weist das Entriegelungselement eine Schwellensicherung auf. Unter dem Begriff "Schwellensicherung" kann im Sinne dieser Anmeldung verstanden werden, dass zum Entriegeln der Deckelklappe das Entriegelungselement entweder nacheinander oder gleichzeitig in Richtung zweier Achsen relativ zum Getränkebehälter bewegt werden muss. Beispielsweise muss das Entriegelungselement nach "schräg oben" (also entlang einer Längs- und einer Querachse des Behälters) bewegt werden, um die Rastverbindung zwischen der Deckelklappe und dem Deckel zu lösen. Hierdurch wird verhindert, dass beispielsweise ein versehentliches "Drücken" des Entriegelungselements ein Öffnen des Deckels zur Folge hat. Durch die vorstehend beschriebene Schwellensicherung ist sichergestellt, dass ein alleiniges "Drücken" des Entriegelungselements nicht ausreicht, um die Verriegelung zu lösen. Es muss vielmehr noch eine Bewegung des Entriegelungselements in eine weitere Richtung, also entlang einer weiteren Achse relativ zum Getränkebehälter erfolgen.

Der Klappmechanismus und die Kommunikationseinheit sind derart ausgebildet, die Datenverbindung mit dem mobilen Endgerät des Nutzers beim Schwenken der Deckelklappe von der geschlossenen Stellung in die offene Stellung auszubilden. Hierdurch wird zum einen die Datenverbindung nur dann aufgebaut, wenn diese auch erfasste Werte übermitteln soll und zum anderen wird die Nutzungsdauer pro Aufladung des elektrischen Energiespeichers verlängert, da die Datenverbindung nicht dauerhaft aktiv ist.

In einer Ausführungsform weist die Sensoreinheit einen Turbinensensor oder einen Lasersensor oder einen Ultraschallsensor zur Erfassung der entnommenen Flüssigkeitsmenge auf. Bei einem Turbinensensor fließt die Flüssigkeit durch ein turbinenähnliches Bauteil, das drehbar gelagert ist. Durch das Hindurchfließen der Flüssigkeit wird das turbinenähnliche Bauteil in Rotation versetzt und aktiviert einen Zähler, der anhand der Umdrehungen die durch den Sensor geflossene Menge an Flüssigkeit bestimmt. Bei dem Lasersensor wird jeweils nach einer Entnahme von Flüssigkeit der aktuelle Füllstand im Becher ermittelt, um so auf die entnommene Flüssigkeitsmenge zu schließen. Derartige Durchflusssensortypen zur Erfassung von Flüssigkeitsmengen sind auf dem freien Markt in verschiedenen Varianten und Ausgestaltungen erhältlich, was den Aufbau bzw. die Konfiguration des Getränkebehälters vereinfacht.

Um den Getränkebehälter wiederzuverwenden und, um diesen einfacher transportieren zu können, weist der Becher und/oder der Deckel einen Kunststoff auf bzw. ist der Becher und/oder der Deckel aus einem Kunststoff gebildet. Hierbei kann es sich um einen in der Getränkeindustrie und speziell bei der Herstellung von Getränkebehältern üblichen Kunststoff handeln. Durch die Verwendung des Kunststoffes ist der Getränkebehälter ebenfalls vor Beschädigungen (beispielsweise durch einen Aufprall auf dem Erdboden) besser geschützt als zerbrechliche Materialien, wie z.B. Porzellan.

Um den Getränkebehälter ferner einfacher und handlicher transportieren zu können, weist der Becher ein Volumen mit einem Wert im Bereich von 0,21 bis 1,51, vorzugsweise im Bereich zwischen 0,5l und 1l und insbesondere mit einem Wert von 0,75l auf.

Gemäß einer Ausführungsform ist an dem Deckel eine Trageschlaufe angeordnet. Die Trageschlaufe dient einem einfachen Greifen und Tragen des Getränkebehälters und ist insbesondere farblich von dem jeweiligen Nutzer individualisierbar. Alternativ ist die Trageschlaufe reversibel, also abnehmbar an dem Deckel angeordnet und kann hierdurch beispielsweise durch andere Trageschlaufen anderer Farbe ausgetauscht werden.

Ein Ausführungsbeispiel der Erfindung wird nachstehend anhand der Figuren näher erläutert. Diese zeigen in teilweise stark vereinfachter Darstellung:
- Fig. 1: eine perspektivische Darstellung eines erfindungsgemäßen Getränkebehälters bei geöffneter Deckelklappe;
- Fig. 2: eine perspektivische Darstellung des erfindungsgemäßen Getränkebehälters bei geschlossener Deckelklappe sowie
- Fig. 3: eine skizzierte Draufsicht auf den erfindungsgemäßen Getränkebehälter bei geöffneter Deckelklappe.

In den Figuren sind gleichwirkende Bauteile stets mit den gleichen Bezugszeichen dargestellt.

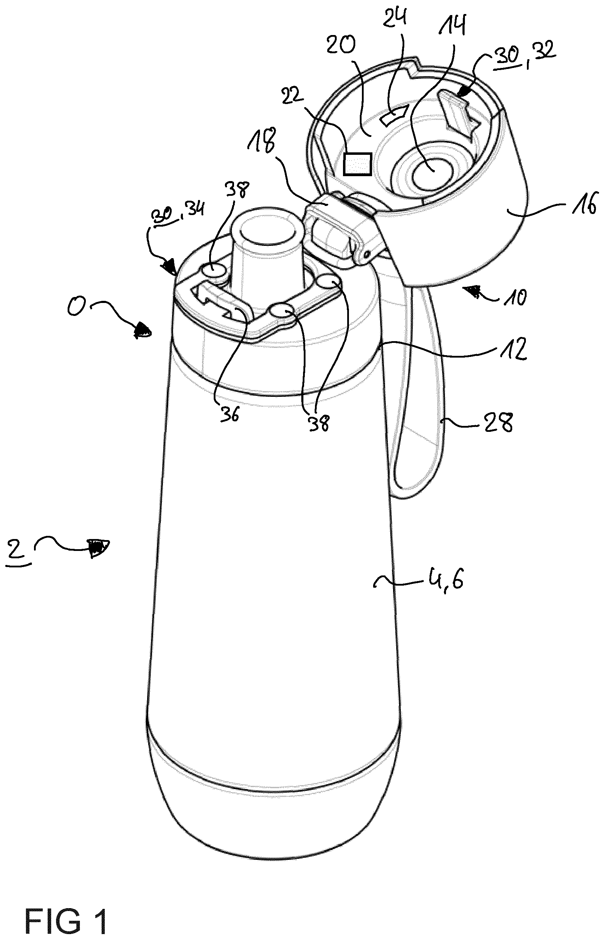

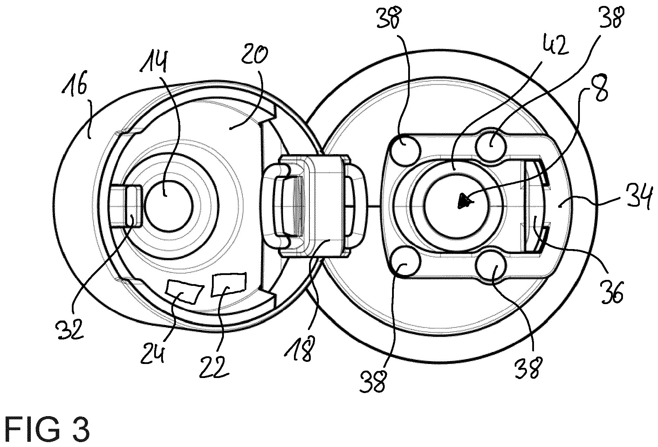

In Fig. 1 ist eine perspektivische Darstellung einer Ausführungsform eines erfindungsgemäßen Getränkebehälters 2 dargestellt. Der Getränkebehälter 2 weist einen Becher 4 mit einer Wandung 6 auf. Die Wandung 6 begrenzt einen an einer Oberseite O des Bechers 4 offenen Aufnahmeraum 8 (siehe Fig. 3) für Flüssigkeit.

Ferner weist der Getränkebehälter 2 einen Deckel 10 auf, der derart auf der Oberseite O des Bechers 4 abnehmbar angeordnet ist, dass er eine Aufnahmeraumöffnung 12 (durch angeordneten Deckel verdeckt) des Aufnahmeraums 8 verschließt. Beispielsweise wird der Deckel 10 hierzu auf die Oberseite O des Bechers 4 aufgeschraubt.

In dem Deckel 10 ist eine Sensoreinheit 14 angeordnet, zur Erfassung der aus dem Becher 4 entnommenen Flüssigkeitsmenge durch einen Nutzer.

In Fig. 1 ist ferner der Deckel 10 in einer geöffneten Stellung dargestellt. Zum Verschließen und Öffnen, also Überführen des Deckels 10 von einer geschlossenen Stellung in eine geöffnete Stellung, weist der Deckel 10 eine Deckelklappe 16 und einen Klappmechanismus 18 auf, wobei die Deckelklappe 16 an dem Klappmechanismus 18 schwenkbar gelagert ist, um die zuvor genannten Stellungen einnehmen zu können. Die Sensoreinheit 14 ist im Ausführungsbeispiel gemäß Fig. 1 in der Deckelklappe 16 angeordnet.

Des Weiteren weist der Deckel 10 eine drahtlose Kommunikationseinheit 20 auf. Die drahtlose Kommunikationseinheit 20 ist derart eingerichtet, mit einem mobilen Endgerät (nicht dargestellt) des Nutzers eine Datenverbindung auszubilden. Die drahtlose Kommunikationseinheit 20 und die durch sie ausgebildete Datenverbindung dienen ebenfalls dazu, die erfasste, entnommenen Flüssigkeitsmenge zur Auswertung an das mobile Endgerät des Nutzers zu übermitteln.

Im Ausführungsbeispiel gemäß Fig. 1 weist der Deckel 10 ebenfalls einen elektrischen Energiespeicher 22 auf, der der Einfachheit halber lediglich als Rechteck dargestellt ist. Der elektrische Energiespeicher 22 dient einer Versorgung der Sensoreinheit 14 und/oder der drahtlosen Kommunikationseinheit 20 mit elektrischer Energie.

Um den elektrischen Energiespeicher 22 aufzuladen, weist der Deckel 10 ein Ladeelement 24 auf, das in diesem Ausführungsbeispiel ebenfalls lediglich aus Rechteck dargestellt ist. Das Ladeelement 24 kann als drahtloses Ladeelement zu einem induktiven Laden des elektrischen Energiespeichers 22 ausgebildet sein. Ergänzend oder alternativ hierzu kann der Deckel 10 oder der Becher 4 auch ein Ladeelement 24 zu einem kabelgebundenen Laden des elektrischen Energiespeichers 22 aufweisen.

Der Getränkebehälter 2 weist ferner eine Trageschlaufe 28 auf, die ein Silikon aufweist und insbesondere aus Silikon gefertigt ist.

In Figur 1 weist der Deckel 10 eine Verriegelungseinheit 30 auf. Die Verriegelungseinheit 30 weist ihrerseits ein Rastelement 32 zum Verriegeln des Klappmechanismus 18 und ein Entriegelungselement 34 zum Entriegeln des Rastelements 32 auf. Das Rastelement 32 ist hierbei als Rastnase ausgebildet, die in ein komplementär ausgebildete Haltenase 36 zum Verschließen des Deckels 10 einrastet. Um diese Verrastung zu lösen, wird das Entriegelungselement 34 in zwei Achsen bewegt werden, beispielsweise nach "schräg oben", um die Rastnase aus der Haltenase 36 zu drücken und somit die Verriegelung zu lösen. Das Entriegelungselement 34 bildet somit eine Schwellensicherung aus.

Damit beim Verschließen eine einfache und zuverlässige Verrastung der Rastnase in der Rastnase 36 sichergestellt ist und das Entriegelungselement 34 die Ausbildung der Rastverbindung nicht behindert, hält zumindest ein Magnetpaar 38, in Fig. 1 vier Magnetpaare (lediglich drei sichtbar) das Entriegelungselement 34 in einer Verriegelungsstellung (Stellung des Entriegelungselements 34 wie in Fig. 1 dargestellt). Hierbei liegt das Entriegelungselement 34 flach auf einer Oberfläche des Deckels 10 auf.

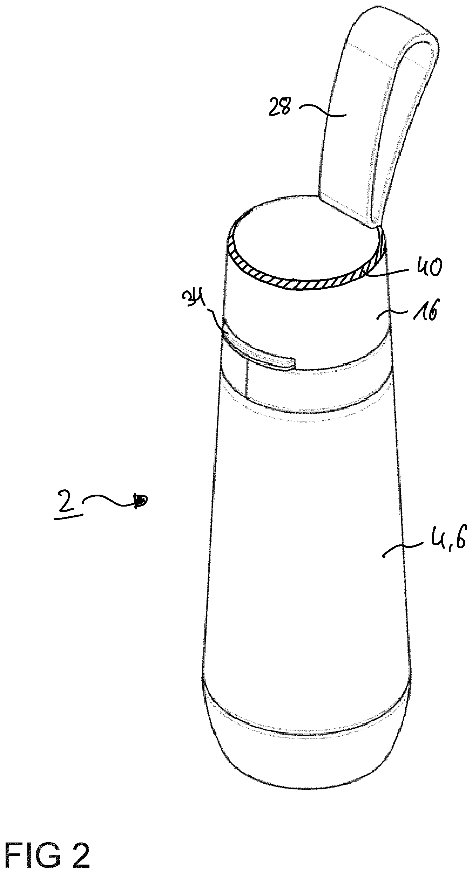

In Fig. 2 ist der Getränkebehälter 2 gem. Fig. 1 gezeigt; jedoch mit geschlossenem Deckel 10. Im Wesentlichen entspricht diese Darstellung der bereits vorstehend beschriebenen Abbildung, sodass nachfolgend, um Wiederholungen zu vermeiden, nur auf die Unterschiede Bezug genommen wird. In dieser Ansicht ist ein als LED-Ring ausgebildetes Leuchtelement 40 zu erkennen, das an einer Oberseite des Deckels 10 und insbesondere an einer Oberseite der Deckelklappe 16 angeordnet ist.

In der in Fig. 3 dargestellten Draufsicht auf den erfindungsgemäßen Getränkebehälter 2 bei geöffneter Deckelklappe 16 ist insbesondere der durch ein Mundstück 42 angedeutete Aufnahmeraum 8 des Bechers 4 erkennbar.

### Bezugszeichenliste

- 2: Getränkebehälter
- 4: Becher
- 6: Wandung
- 8: Aufnahmeraum
- 10: Deckel
- 12: Aufnahmeraumöffnung
- 14: Sensoreinheit
- 16: Deckelklappe
- 18: Klappmechanismus
- 20: drahtlose Kommunikationseinheit
- 22: elektrischer Energiespeicher
- 24: Ladeelement
- 26: drahtlose Kommunikationseinheit
- 28: Trageschlaufe
- 30: Verriegelungseinheit
- 32: Rastelement
- 34: Entriegelungselement
- 36: Rastnase
- 38: Magnetpaar
- 40: Leuchtelement
- 42: Mundstück

- O: Oberseite

## Patentansprüche

1. Getränkebehälter (2) aufweisend:
- einen Becher (4) mit einer Wandung (6), die einen an einer Oberseite (O) des Bechers (4) offenen Aufnahmeraum (8) für Flüssigkeit begrenzt, sowie
- einen Deckel (10), der derart auf der Oberseite (O) des Bechers (4) abnehmbar angeordnet ist, dass er eine Aufnahmeraumöffnung (12) des Aufnahmeraumes (8) fluiddicht verschließt,
wobei
- in dem Deckel (10) eine Sensoreinheit (14) angeordnet ist, zur Erfassung einer aus dem Becher (4) von einem Nutzer entnommenen Flüssigkeitsmenge,
- der Deckel (10) ein Leuchtelement (40) aufweist, das derart eingerichtet ist, in Abhängigkeit der vom Nutzer entnommenen Flüssigkeitsmenge verschiedenfarbig zu leuchten und
- der Deckel (10) ferner eine drahtlose Kommunikationseinheit (20) aufweist, die derart eingerichtet ist, mit einem mobilen Endgerät des Nutzers eine Datenverbindung auszubilden und die erfasste Flüssigkeitsmenge zur Auswertung an das mobile Endgerät des Nutzers zu übermitteln,
wobei der Deckel (10) eine Deckelklappe (16) und einen Klappmechanismus (18) aufweist, an dem die Deckelklappe (16) von einer geschlossenen Stellung in eine offene Stellung und umgekehrt schwenkbar gelagert ist,
**dadurch gekennzeichnet, dass**
der Klappmechanismus (18) und die drahtlose Kommunikationseinheit (20) derart ausgebildet sind, die Datenverbindung mit dem mobilen Endgerät beim Schwenken der Deckelklappe (16) von der geschlossenen Stellung in die offene Stellung auszubilden.

2. Getränkebecher (2) nach Anspruch 1
wobei die Sensoreinheit (14) ferner dazu eingerichtet ist, organische Schadstoffe, insbesondere Bakterien und/oder Viren im Speichel des Nutzers und/oder zumindest einen aus dem Speichel des Nutzers ableitbaren Vitalwert zu erfassen.

3. Getränkebehälter (2) nach Anspruch 1 oder 2,
wobei der Becher (4) und/oder der Deckel (10) einen elektrischen Energiespeicher (22) aufweisen/aufweist.

4. Getränkebehälter (2) nach Anspruch 3,
wobei der Becher (4) und/oder der Deckel (10) ein Ladeelement (24) zum kabelgebundenen und/oder drahtlosen Laden des elektrischen Energiespeichers (22) aufweisen/aufweist.

5. Getränkebehälter (2) nach einem der vorhergehenden Ansprüche, wobei das Leuchtelement (40) als ein Leuchtring, insbesondere als ein LED-Leuchtring ausgebildet ist, der an einer Oberseite des Deckels (10) angeordnet ist.

6. Getränkebehälter (2) nach einem der vorhergehenden Ansprüche, insbesondere Anspruch 1,
wobei der Deckel (10) zum Verriegeln des Klappmechanismus (18) eine Verriegelungseinheit (30) aufweist, die ein Rastelement (32) zum Verriegeln des Klappmechanismus (18) und ein Entriegelungselement (34) zum Entriegeln des Rastelements (32) aufweist.

7. Getränkebehälter (2) nach Anspruch 6,
wobei das Entriegelungselement (34) mittels zumindest einem Magnetpaar (38) in einer Verriegelungsstellung gehalten ist.

8. Getränkebehälter (2) nach einem der vorhergehenden Ansprüche, wobei die Sensoreinheit (14) einen Turbinensensor oder ein Lasersensor oder einen Ultraschallsensor zur Erfassung der entnommenen Flüssigkeitsmenge aufweist.

9. Getränkebehälter (2) nach einem der vorhergehenden Ansprüche, wobei der Becher (4) und/oder der Deckel (10) einen Kunststoff aufweisen/aufweist.

10. Getränkebehälter (2) nach einem der vorhergehenden Ansprüche, wobei der Aufnahmeraum (8) ein Volumen mit einem Wert im Bereich von 0,2l bis 1,5l, vorzugsweise im Bereich zwischen 0,5l und 1l und insbesondere mit einem Wert von 0,75l aufweist.

11. Getränkebehälter (2) nach einem der vorhergehenden Ansprüche, wobei an dem Deckel (10) eine Trageschlaufe (28) angeordnet ist.

## Claims

1. Beverage container (2) comprising:
- a cup (4) with a wall (6) which delimits a receiving space (8) for liquid that is open on an upper side (O) of the cup (4), and
- a lid (10), which is arranged removably on the top (O) of the cup (4) in such a way that it closes a receiving space opening (12) of the receiving space (8) in a fluid-tight manner,
where
- a sensor unit (14) is arranged in the lid (10) for detecting an amount of liquid removed from the cup (4) by a user,
- the lid (10) has a lighting element (40) which is set up to glow in different colors depending on the amount of liquid removed by the user, and
- the lid (10) also has a wireless communication unit (20) which is set up to establish a data connection with a mobile terminal of the user and to transmit the detected amount of liquid to the mobile terminal of the user for evaluation,
wherein the lid (10) has a lid flap (16) and a folding mechanism (18) on which the lid flap (16) is pivotally mounted from a closed position to an open position and vice versa,
**characterized in that**
the folding mechanism (18) and the wireless communication unit (20) are designed to establish the data connection with the mobile terminal when the lid flap (16) is pivoted from the closed position to the open position.

2. Beverage cup (2) according to claim 1, wherein
the sensor unit (14) is further set up to detect organic pollutants, in particular bacteria and / or viruses in the user's saliva and I or at least one vital value that can be derived from the user's saliva.

3. Beverage container (2) according to claim 1 or 2, wherein
the cup (4) and/or the lid (10) comprise/comprises an electrical energy storage (22).

4. Beverage container (2) according to claim 3, wherein the cup (4) and/or the lid (10) comprise/comprises a charging element (24) for wired and/or wireless charging of the electrical energy storage (22).

5. Beverage container (2) according to one of the preceding claims,
wherein the lighting element (40) is designed as a lighting ring, in particular as an LED lighting ring, which is arranged on an upper side of the lid (10).

6. Beverage container (2) according to one of the preceding claims, in particular claim 1,
wherein the lid (10) for locking the folding mechanism (18) has a locking unit (30) which has a detent element (32) for locking the folding mechanism (18) and an unlocking element (34) for unlocking the detent element (32).

7. Beverage container (2) according to claim 6, wherein the unlocking element (34) is held in a locking position by means of at least one pair of magnets (38).

8. Beverage container (2) according to one of the preceding claims, wherein the sensor unit (14) has a turbine sensor or a laser sensor or an ultrasonic sensor for detecting the amount of liquid removed.

9. Beverage container (2) according to one of the preceding claims, wherein the cup (4) and/or the lid (10) comprise/comprises a plastic.

10. Beverage container (2) according to one of the preceding claims, wherein the receiving space (8) has a volume with a value in the range of 0.2l to 1.5l, preferably in the range between 0.5l and 1l and in particular with a value of 0.751.

11. Beverage container (2) according to one of the preceding claims, wherein a carrying loop (28) is arranged on the lid (10).

## Revendications

1. Récipient pour boisson (2), comprenant :
- un gobelet (4) avec une paroi (6) qui délimite un espace de réception (8) pour un liquide, ouvert sur une face supérieure (O) du gobelet (4), et
- un couvercle (10) disposé de façon amovible sur la face supérieure (O) du gobelet (4) de manière à fermer de façon étanche aux fluides une ouverture (12) de l'espace de réception (8),
dans lequel
- une unité de détection (14) est disposée dans le couvercle (10), destinée à détecter une quantité de liquide prélevée dans le gobelet (4) par un utilisateur,
- le couvercle (10) présente un élément lumineux (40) qui est conçu de manière à s'éclairer de différentes couleurs en fonction de la quantité de liquide prélevée par l'utilisateur, et
- le couvercle (10) présente en outre une unité de communication sans fil (20) qui est conçue de manière à établir une liaison de données avec un terminal mobile de l'utilisateur et à communiquer la quantité de liquide détectée au terminal mobile de l'utilisateur à des fins d'évaluation,
le couvercle (10) comportant un volet de couvercle (16) et un mécanisme de rabattement (18) sur lequel le volet de couvercle (16) est monté pivotant d'une position fermée à une position ouverte et inversement,
**caractérisé en ce que**
le mécanisme de rabattement (18) et l'unité de communication sans fil (20) sont conçus de manière à établir la liaison de données avec le terminal mobile lors du pivotement du volet de couvercle (16) de la position fermée à la position ouverte.

2. Récipient pour boisson (2) selon la revendication 1,
dans lequel l'unité de détection (14) est en outre conçue pour détecter des substances nocives organiques, en particulier des bactéries et/ou des virus dans la salive de l'utilisateur, et/ou au moins une valeur vitale susceptible d'être déduite de la salive de l'utilisateur.

3. Récipient pour boisson (2) selon la revendication 1 ou 2,
dans lequel le gobelet (4) et/ou le couvercle (10) comporte(nt) un accumulateur d'énergie électrique (22).

4. Récipient pour boisson (2) selon la revendication 3,
dans lequel le gobelet (4) et/ou le couvercle (10) comporte(nt) un élément de charge (24) pour la charge par câble et/ou sans fil de l'accumulateur d'énergie électrique (22).

5. Récipient pour boisson (2) selon l'une des revendications précédentes, dans lequel l'élément lumineux (40) est réalisé sous la forme d'un anneau lumineux, en particulier d'un anneau lumineux à DEL, qui est disposé sur une face supérieure du couvercle (10).

6. Récipient pour boisson (2) selon l'une des revendications précédentes, en particulier selon la revendication 1,
dans lequel le couvercle (10) comprend une unité de verrouillage (30) pour verrouiller le mécanisme de rabattement (18), laquelle comprend un élément d'arrêt (32), destiné à verrouiller le mécanisme de rabattement (18), et un élément de déverrouillage (34), destiné à déverrouiller l'élément d'arrêt (32).

7. Récipient pour boisson (2) selon la revendication 6,
dans lequel l'élément de déverrouillage (34) est maintenu dans une position de verrouillage au moyen d'au moins une paire d'aimants (38).

8. Récipient pour boisson (2) selon l'une des revendications précédentes, dans lequel l'unité de détection (14) comprend un capteur à turbine ou un capteur laser ou un capteur à ultrasons pour détecter la quantité de liquide prélevée.

9. Récipient pour boisson (2) selon l'une des revendications précédentes, dans lequel le gobelet (4) et/ou le couvercle (14) comporte(nt) une matière plastique.

10. Récipient pour boisson (2) selon l'une des revendications précédentes, dans lequel l'espace de réception (8) présente un volume dont la valeur est dans une plage de 0,2 I à 1,5 l, de préférence dans une plage comprise entre 0,5 l et 1 l, et en particulier dont la valeur est de 0,75 l.

11. Récipient pour boisson (2) selon l'une des revendications précédentes, dans lequel une dragonne (28) est disposée sur le couvercle (10).
